# EUROPEAN PATENT APPLICATION

(11) **EP 3 703 075 A1**
(43) Date of publication of application: **02.09.2020**
(21) Application number: 18869838.5
(22) Date of filing: 12.07.2018
(51) Int. Cl.: G21D 3/00

(54) **METHOD FOR VERIFYING MEASUREMENT CONTROL SYSTEM OF NUCLEAR POWER PLANT, AND VERIFICATION DEVICE THEREFOR**

(30) Priority: 23.10.2017 KR 20170137465
(71) Applicant: Korea Hydro & Nuclear Power Co., Ltd, Gyeongju-si, Gyeongsangbuk-do 38120 (KR)
(72) Inventor: BAE, Byoung Hwan, Daejeon 34053 (KR)
(74) Representative: Habermann, Hruschka & Schnabel
(86) International application number: PCT/KR2018/007888
(87) International publication number: WO 2019/083126

(57) **Abstract**

The present invention relates to a method for verifying a measurement control system of a nuclear power plant, and a verification device therefor. A method for verifying a measurement control system used in a nuclear power plant according to the present invention comprises the steps of: connecting a measurement control system to be verified and a simulator that simulates a nuclear power plant; loading a control logic for a first system to the measurement control system to be verified; and verifying the measurement control system to be verified while the first system is operating in the measurement control system to be verified and a second system is operating in the simulator.

## Description

### [Technical Field]

The present invention relates to a method for validating an instrumentation and control system for a nuclear power plant, and an apparatus for validating the same.

### [Background Art]

An existing simulator for a nuclear power plant is classified largely into two types.

The first type is to realize both a plant machine model and a plant control model as software and simulate the same by a combination of computers, and the second type is to realize a plant machine model and a plant control model as software and operate only the plant control logic by a simulator controller.

Both the two type process signal are not enabled to simulate a control signal in the same manner as in a work field in which signal is processed by a communication cable, and not similar to a configuration method of an actual instrumentation and control system in nuclear power plants. Thus, there are many disadvantages in that it is not possible to test reliability of a digital control system and test whether the digital control system operates properly.

### [Disclosure]

### [Technical Problem]

Accordingly, an object of the present invention is to provide a method for validating an instrumentation and control system of a nuclear power plant with high reliability, and an apparatus for validating the same.

### [Technical Solution]

The object of the present invention can be accomplished by providing a method for validating an instrumentation and control system used in a nuclear power plant, the method including: connecting an instrumentation and control system to be validated and a simulator imitating the nuclear power plant; loading a control logic of a first system to the instrumentation and control system to be validated; and validating the instrumentation and control system to be validated while the first system operates in the instrumentation and control system to be validated and a second system operates in the simulator.

The instrumentation and control system to be validated and the simulator may be connected through an I/O interface to thereby exchange information with each other.

The instrumentation and control system to be validated may include a digital control system, and the validating may include performing at least one of a redundancy performance test on the digital control system, a unit test of a control system in nuclear power plant and an integration test of the control system in nuclear power plant.

The method may further include validating the instrumentation and control system to be validated again by changing the first system.

The validating may include generating an abnormal signal in the simulator.

The validating may be performed when reaching a steady state after a transient state.

The object of the present invention can be accomplished by providing an apparatus for validating an instrumentation and control system used in a nuclear power plant, the apparatus including: a simulator server comprising a simulator that imitates the nuclear power plant; an I/O interface connecting the simulator server and an instrumentation and control system to be validated; and a computer processing unit connected with the instrumentation and control system to be validated and configured to validate the instrumentation and control system to be validated.

The computer processing unit may be further configured to: load a control logic of a first system to the instrumentation and control system to be validated; and operate a second system through the simulator.

The computer processing unit may be further configured to validate the instrumentation and control system to be validated with changing a system for a control logic to be loaded to the instrumentation and control system to be validated.

The instrumentation and control system to be validated and the simulator may be connected through the I/O interface to thereby exchange information with each other.

The simulator server may further include an association program unit configured to associate with a data signal between the instrumentation and control system to be validated and the simulator.

### [Advantageous Effects]

According to the present invention, there are provided a validation method for an instrumentation and control system in a nuclear power plant with high reliability, and an apparatus for validating the same.

The present invention is enabled to implement, modify, change, and delete only a specific instrumentation and control system, which is subject to simulate among control models of a nuclear power plant, in an instrumentation and control system comprised of a digital control system platform (hardware + system software) and application software (control logic), and therefore, the instrumentation and control system may be used to more practically educate or train a system operator or a maintenance personnel. In addition, before construction or operation of the nuclear power plant, a control logic of the instrumentation and control system of the nuclear power plant may be verified and validated, thereby improving efficiency and cutting off manufacturing costs.

In particular, the present invention has configuration of the digital control system of the nuclear power plant and a control signal processing method, which are the same as implemented in real world, compared to an existing simulator, and thus the present invention is very practical. Therefore, the instrumentation and control system of the nuclear power plant may improve reliability and accuracy, compared to an existing simulator.

### [Description of Drawings]

FIG. 1 is a diagram showing configuration of an apparatus for validating an instrumentation and control system for a nuclear power plant according to an embodiment of the present invention.
FIG. 2 is a flowchart showing a method for validating an instrumentation and control system for a nuclear power plant according to the present invention.

### [Mode for Invention]

The present invention relates to an apparatus for validating an instrumentation and control system, which is to be actually installed in a nuclear power plant, in association with a nuclear power plant simulator. A plant machine model of the nuclear power plant is implemented in a simulator, and a control model thereof is implemented in a digital control system installed in the nuclear power plant. For transmitting and receiving a control signal, a control cable is used for connection with an in-site signal transmitter, thereby improving reliability and accuracy of the instrumentation and control system in the nuclear power plant.

The present invention may directly implement application software (a control logic) to be applied in a nuclear power plant, and may enable a test for validating characteristics of the system by applying various plant scenarios, and therefore, it is possible to prevent trials and errors when it comes to future design change and maintenance and to prevent a shutdown of the plant due to transient state, thereby bringing out considerable economic benefits.

That is, a digital control system platform (hardware, system software) for implementing an instrumentation and control system for a nuclear power plant, and application software (control logic) are applied in an environment identical to a real work field with normal and abnormal scenarios to thereby validate the design of the system and the logic before construction of the nuclear power plant. In addition, it is possible to validate performance of a digital control system (a controller redundancy performance test, etc.) by associating an instrumentation and control system, identical to that of the power plant, with a simulator.

Hereinafter, the present invention will be described in more details with reference to the accompanying drawings.

The accompanying drawings correspond to merely an example shown to illustrate technical scope of the present invention more detail, and the scope of the present invention is not limited to the accompanying drawings. In addition, in the accompanying drawings, there may be difference in size and spacing from actual implementation for the description of a relationship between elements.

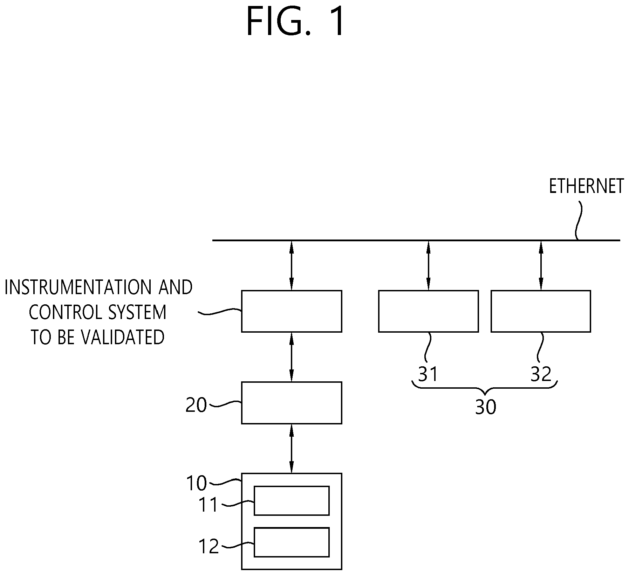

With reference to FIG. 1, an apparatus for validating an instrumentation and control system for a nuclear power plant according to an embodiment of the present invention will be described. FIG. 1 is a diagram illustrating configuration of an apparatus for validating an instrumentation and control system for a nuclear power plant according to an embodiment of the present invention.

A validating apparatus 1 comprises a simulator server 10, an I/O interface 20, and a computer processing unit 30.

The simulator server 10 implements a plant machine model of the nuclear power plant in a software manner, and includes a simulator 11 and an association program unit 12. The simulator 11 implements the plant machine model of the nuclear power plant in a software manner, and the association program unit 12 associates data signals between an instrumentation and control system subject to be validated and the simulator 11.

The I/O interface 20 is a signal conversion/inversion apparatus for converting an electrical signal generated in an I/O module of the instrumentation and control system into a data signal and converting a data signal generated by the simulator server 10 into an electrical signal.

An instrumentation and control system to be validated is connected with the simulator server 10 through the I/O interface 20 and connected with the computer processing unit 30 via Ethernet. The instrumentation and control system includes a digital control system, comprised of a redundant controller for executing a nuclear power plant control logic and an I/O module, and a control logic application software programs.

The computer processing unit 30 includes an operating workstation 31 and an engineering workstation 32 for an operator and a maintainer of the instrumentation and control system for the nuclear power plant. The engineering workstation 32 is an engineering computer to establish and maintain the instrumentation and control system, for example, operating a control logic of a digital control system, uploading/downloading, configuring and implementation of a control screen, inputting I/O information, etc. The operating workstation 31 is an operating computer for monitoring, controlling, and operating the nuclear power plant through the implementation and control system.

The aforementioned elements are connected by a control cable or an association cable.

Hereinafter, a validating method according to the present invention will be described.

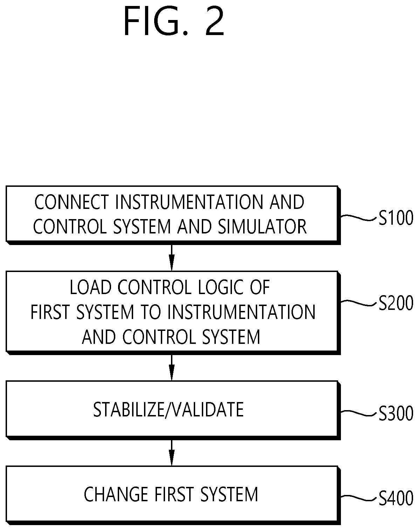

FIG. 2 is a flowchart showing a method for validating an instrumentation and control system in a nuclear power plant according to an embodiment of the present invention.

First, an instrumentation and control system to be validated and the simulator 11 are connected (S100). In this step, the instrumentation and control system and the simulator 11 are connected through the I/O interface 20, and the instrumentation and control system is also connected with the computer processing unit 30.

Then, a control logic of a first system is loaded to the instrumentation and control system (S200) and then validated after stabilization (S300). This procedure will be described in more details.

Suppose that a control system necessary to operate an NSSS control system for a nuclear power plant is comprised of System 1 (reactor output control system), System 2 (feedwater control system), System 3 (pressurizer control system), ..., System n. If it is assumed that System 2 and System 3 among them, that is, a specific first system, are tested, systems other than System 2 and System 3, that is, second systems, operate in the simulator 11 and System 2 and System 3 operate in the instrumentation and control system. In this case, simulation information processed in the simulator 11 and control information processed in DCS are read/written in a counterpart system by the I/O interface 20 and the association program unit 12 to be utilized as a process value.

For example, if the feedwater control system and the pressurizer control system operate in the instrument and control system to be validated and all other control systems operate in the simulator 11, a logic program of the feedwater control system and a logic program of the pressurizer control system should be loaded to the instrumentation and control system by the engineering workstation 32 and the simulator 11 should be ready to execute all control system logics excluding the logics of the feedwater control system and the pressurizer control system.

Such system selection is performed through a selection function provided in the association program. The simulator 11 operates a plant environment in a 100% power mode of a normal state. A power plant scenario (operating at 70% power from 100% power) suitable to test the feedwater control system and the pressurizer control system loaded to the instrumentation and control system to be validated is selected in the simulator 11.

If a plant environment is formed according to a scenario, a failure factor for stopping one main feedwater pump is applied (that is, an abnormal signal is generated) to verify if operation is performed properly according to system characteristics. This verifying process is to observe major variants showing characteristics (reactor output, reactor coolant average temperature, a water level of a steam generator, flow of the main feedwater pump header, a water level of a pressurizer, pressure of the pressurizer, a velocity of the main feedwater pump, etc.) and to verify if characteristics required by system design are well maintained.

Stopping of one main feedwater pump leads to a stop signal from a simulator model, and this stop signal makes a feedwater control system logic program in the instrumentation and control system to receive a main feedwater pump stopped status, and then the other two main feedwater pump increase in velocity by a velocity control algorithm according to received information, and the two main feedwater pumps increases a flow rate instead of the stopped main water supply pump, thereby supplying a constant amount of water to the steam generator.

Monitoring of a status of a feedwater control system and a pressurizer control system (a control logic value) may make it possible to verify a change in trend and the state through the operating workstation 31, and, in the simulator 11, it is possible to easily monitor a change in the state of the plant due to control signals generated by the instrumentation and control system.

When the simulator 11 and the instrumentation and control system are connected through the I/O interface 20, normal operation is not allowed immediately but allowed after a transition state for a predetermined period of time. Thus, in order to determine switch from the transition state to the normal state, critical parameters of a corresponding test system (for example, requirements for velocity settings of three main feedwater pumps, downcomer valve position requirements, economizer valve position requirements, etc.) are compared, and, if an error falls into, for example, 5% of a parameter value, the normal state is defined, and, in this normal state, information that test examination is ready to be performed is informed to an examiner through alarming on an MMI screen of an association program.

Here, the transition state refers to a period of time taken until a result value of control system performed by the simulator and a result value of the same control system performed by the implementation and control system are calculated to be equal.

After the validating, another validation is performed again by changing the first system (S400).

According to the present invention, a plant machine model of a nuclear power plant is configured as a simulator implemented in a software manner and a control model thereof is implemented by the same instrumentation and control system of the nuclear power plant. Accordingly, a control logic of the nuclear power plant is performed by a controller, which is an actual digital control system, and a control signal between the controller and a work-field signal transmitter is transmitted and received using the same control cable used in the nuclear power plant, and environment is configured as the same as in the work field, and therefore, it is possible to validate the instrumentation and control system for the nuclear power plant more accurately and more reliably.

In addition, by only selecting an instrumentation and control system for the nuclear power plant to be simulated, the same test environment as in the actual nuclear power plant is maintained. Further, the various implementation and control system for the nuclear power plant may be validated using only one digital control system as necessary, thereby cutting off manufacturing costs and improving efficiency. Besides, an actual controller, an I/O module, an operating workstation, and an engineering workstation are configured as the same as in the nuclear power plant, thereby providing a system optimal for training an operator and a maintenance personnel of the instrumentation and control system in the nuclear power plant.

The above-described embodiments are illustrative of the present invention, and the present invention is not limited thereto. Since numerous variations and modifications will become apparent to those skilled in the art once the above disclosure is fully appreciated, the scope and spirit of the invention come within the scope of the appended claims.

## Claims

1. A method for validating an instrumentation and control system used in a nuclear power plant, the method comprising:
connecting an instrumentation and control system to be validated and a simulator imitating the nuclear power plant;
loading a control logic of a first system to the instrumentation and control system to be validated; and
validating the instrumentation and control system to be validated while the first system operates in the instrumentation and control system to be validated and a second system operates in the simulator.

2. The method of claim 1, wherein the instrumentation and control system to be validated and the simulator are connected through an I/O interface to thereby exchange information with each other.

3. The system of claim 1,
wherein the instrumentation and control system to be validated comprises a digital control system, and
wherein the validating comprises performing at least one of a redundancy performance test on the digital control system, a unit test of a control system in nuclear power plant and an integration test of the control system in nuclear power plant.

4. The method of claim 2, further comprising validating the instrumentation and control system to be validated again by changing the first system.

5. The method of claim 2, wherein the validating comprises generating an abnormal signal in the simulator.

6. The method of claim 2, wherein the validating is performed when reaching a normal state after a transition state.

7. An apparatus for validating an instrumentation and control system used in a nuclear power plant, the apparatus comprising:
a simulator server comprising a simulator that imitates the nuclear power plant;
an I/O interface connecting the simulator server and an instrumentation and control system to be validated; and
a computer processing unit connected with the instrumentation and control system to be validated and configured to validate the instrumentation and control system to be validated.

8. The apparatus of claim 7, wherein the computer processing unit is further configured to:
load a control logic of a first system to the instrumentation and control system to be validated; and
operate a second system in the simulator.

9. The apparatus of claim 8, wherein the computer processing unit is further configured to validate the instrumentation and control system to be validated with changing a system for a control logic to be loaded to the instrumentation and control system to be validated.

10. The apparatus of claim 8, wherein the instrumentation and control system to be validated and the simulator are connected through the I/O interface to thereby exchange information with each other.

11. The apparatus of claim 8, wherein the simulator server further comprises an association program unit configured to associate with a data signal between the instrumentation and control system to be validated and the simulator.
